# EUROPEAN PATENT APPLICATION

(11) **EP 4 567 587 A1**
(43) Date of publication of application: **11.06.2025**
(21) Application number: 23215318.9
(22) Date of filing: 08.12.2023
(51) Int. Cl.: G06F 8/61, G06F 11/36, G06F 9/455

(54) **INSTALLING AND UPDATING SOFTWARE IN A VEHICLE**

(71) Applicant: Aptiv Technologies AG, 8200 Schaffhausen (CH)
(72) Inventor: SUCHY, Pawel, 8200 Schaffhausen (CH)
(74) Representative: Bardehle Pagenberg Partnerschaft mbB Patentanwälte Rechtsanwälte

(57) **Abstract**

The present invention relates to a method is provided for the update of software in a vehicle comprising a controller and a number of electronic control units, ECUs of different platforms. The controller receives a container associated with one of the different platforms utilized by at least one of the number of ECUs, the container comprising a number of container layers, the container layers comprising at least a software application layer with a software application package installable at the platform. The controller determines the at least one ECU utilizing the platform among the number of ECUs. The controller initiates installing the software application package at the at least one ECU. An efficient software installation at the vehicle in comparison with e. g. an installation of the entire software system of the vehicle is enabled.

## Description

### FIELD

The present disclosure generally relates to a method of installing software in a vehicle comprising a number of electronic control units (ECU) of different platforms.

### BACKGROUND

Remote software update Over-The-Air (OTA) in a vehicle is a relatively new feature which is not addressed well yet as it was not needed. As transition to software defined vehicle has begun there is a need to provide new features and security updates during entire vehicle lifetime. Vehicles are equipped with various electronic control units (ECUs) serving different purposes and being equipped with different software. This requires keeping the software of the ECUs up to date over the lifetime of the vehicle, as well as expanding the software, or correcting errors in the software.

### SUMMARY

Hence, there is a need for a software update in a vehicle.

In this context, methods, systems and computer program products are presented as defined by the independent claims.

In this respect, according to a first aspect a method is provided for the update of software in a vehicle comprising a controller and a number of electronic control units, ECUs of different platforms. The controller receives a container associated with one of the different platforms utilized by at least one of the number of ECUs, the container comprising a number of container layers, the container layers comprising at least a software application layer with a software application package installable at the platform. The controller determines the at least one ECU utilizing the platform among the number of ECUs. The controller initiates installing the software application package at the at least one ECU.

In some examples of the first aspect, the container layers further comprise an installation layer with an installation program configured to install the software application package at the at least one ECU. The method further comprises installing, using the installation program, the software application package at the at least one ECU.

In some examples of the first aspect, the container layers further comprise a library layer with a library to run the container and a manifest with configuration information of the container.

In some examples of the first aspect, the container is received from a software update repository holding software updates for the ECUs of different platforms or from an original equipment manufacturer of the at least one ECU.

In some examples of the first aspect, the container is received over a communication interface of the vehicle configured for receiving containerized software updates for the ECUs of different platforms.

In some examples of the first aspect, the different platforms comprise at least one of different hardware platforms, different operating systems, different virtual runtime environments, different application programming interfaces.

In some examples, of the first aspect, the method further comprises before installing the software application package at the at least one ECU, performing a test installation in a virtual system emulating the platform associated with the container; verifying the test installation; and installing the software application package at the at least one ECU if the verification is affirmative.

In a second aspect, a vehicle assistance system executing a vehicle control function is provided, comprising a control unit and a number of computing units, configured to perform the computer-implemented methods as described herein.

In a third aspect, a vehicle is provided comprising a vehicle assistance system for installing software in a vehicle as described herein.

In a fourth aspect, a computer program is presented that comprises instructions which, when the program is executed by a computer, cause the computer to carry out the methods described herein.

These and other objects, embodiments and advantages will become readily apparent to those skilled in the art from the following detailed description of the embodiments having reference to the attached figures, the invention not being limited to any particular embodiments.

### BRIEF DESCRIPTION OF THE FIGURES

Aspects and examples of the present disclosure are described with reference to the following figures, in which:
FIG. 1 illustrates a (smart) vehicle as described herein.
FIG. 2 depicts a flow chart for the update of software as described herein.
FIG. 3 shows vehicle zones as described herein.
FIG. 4 depicts container layers as described herein.
FIG. 5 depicts a further flow chart for the update of software as described herein.
FIG. 6 illustrates further container layers as described herein.
FIG. 7 depicts a software repository holding software updates.
FIG. 8 shows a vehicle interface for installing and updating software as described herein.
FIG. 9 illustrates a platform as described herein.
FIG. 10 depicts a third flow chart for the update of software as described herein.
FIG. 11 shows a vehicle assistance system.
FIG. 12 schematically shows a vehicle comprising a vehicle assistance system as described herein.
FIG. 13 is a diagrammatic representation of internal components of a data processing system comprised by the vehicle assistance system.

### DETAILED DESCRIPTION

The present disclosure relates to a method of installing software in a vehicle. Before turning to the discussion of specific aspects of the present disclosure, a few general aspects are revisited and terms used hereinafter are briefly explained.

Software update is a relevant aspect of vehicle maintenance and feature growth during entire vehicle lifetime. However, the complexity of hardware systems and software architectures makes, in practice, software updates in a vehicle a difficult task that many original equipment manufacturers (OEM) are confronted with. In addition, software supply chains involving many different partners, such as software developers, vendors and suppliers creating complex software for different parts of a vehicle functionality which then need to be integrated together, often in one system of a vehicle, as well as tested and validated before it may go into production further complicate software update in a vehicle.

Current vehicles already have up to 150 million lines of software code and a growing array of hardware platforms such as sensors and software features need to address many issues such as hardware and software dependency, resource availability and consumption, backward compatibility as well as safety and security requirements.

Furthermore, there is no current standardized hardware or software platform for abstracting dependencies to specialized hardware and basic services to simplify software update process. Today, every OEM is inventing his own way of software updates, such as Over-the-Air (OTA) software updates as well as his own way of software separation. That includes physical separation for e.g. different ECUs, virtualization using hypervisors (e. g. virtual machines) or software architectures which tries to separate software modules from each other. Managing the increasing complexity and number of ECUs in a vehicle has therefore become a challenge for original equipment manufacturers (OEMs).

Currently, there are some early standards (e.g. eSync) trying to unify the update process. Said standards focus on the secure and reliable way of providing bits from the server in the cloud to the vehicle. However, so far, said standards do not provide solutions for updating software of different platforms such as ECUs of different OEMs in a consistent and reliable way. In addition, said standards are not concerned with issues such as software packaging.

The term "installing software" as referred herein comprises first-time installation of a software or software components, as well as updates, upgrades and flashing of software and software components. Further, the term "software" as referred herein relates to all types software required for a vehicle based computing system, ranging from e. g. software for basic-input-output-systems (BIOS), hardware specific code, hardware drivers, protocol software as well as application software.

As an example, flash solutions allow ECUs to be supplied with new software in engineering, manufacturing as well as after vehicle delivery in the repair shop or directly in the customer vehicle. Over-The-Air updating enables to update software in vehicles remotely, also enabling parallel flashing of several vehicles. As part of this process, the entire ECU software image may be replaced with a newer version and the time taken to update the software can often take hours to complete. This in part depends on the size of the software update, the destination memory, protocol and whether encryption is used. The previously installed software may have no relevance on the new update, which can be beneficial if the previous version requires replacing in its entirety rather than upgrading specific parts. The size of the image binary impacts the time taken to transmit and download the file. The new updated software image must also be stored within the target ECU, which requires redundant storage e. g. in order to accommodate any future software update. On the other hand, when using differential or delta file flashing for software updates, the base file may be compared with the new version file and a delta or difference file may be created, thereby reducing the size of the update. Compared with a full binary software update, a differential or delta software update is approximately below 10% of the full binary file size. Delta files are much quicker to transmit, decreasing overall transmission time by up to 90%.

A zonal ECU architecture in a vehicle means that various heterogeneous software is present in the vehicle for many existing ECUs. A vehicle zone forms a layer as part of the electrical/electronic (E/E) architectures of a vehicle connecting the computing layers of the vehicle to the (hundreds of) actuators, sensors, mechatronics and smart ECUs. In vehicle zones, ECUs may act a zonal gateway ECUs providing functionalities for the vehicle zone such as switching for IP devices and backbone, performing gateway functions for legacy devices (LIN, CAN, ...), power delivery (PoDL, power cables), eSwitch/eFuse functionality, additional computation power capability etc. Zone architecture will facilitate independence of sensors and actuators from the central vehicle compute node. Therefore, hardware and software update cycles can differ, and sensor and actuator designs can last a more vehicle design cycles. Zone architectures will reduce the number of ECUs and cable lengths, simplifying the vehicle architecture and the associated system validation effort. As an example, zone architectures may bear savings of 50% and more in length of the wiring harness for controlling and distributing data, and power distribution within a vehicle.

An ECU utilizes or runs on one or more platforms. The term "platform" as used herein may relate to any sort of software and/or hardware platform. In some embodiments, the different platforms of the vehicle ECUs may refer to different computational or software platforms, such as different operating systems, different computing architectures, different processor architectures, different protocol stacks, different virtualization mechanisms.

For example, some vehicle ECUs run on a UNIX or LINUX platform, while other vehicle ECUs are small embedded systems with only a couple of hundred lines of codes (e.g. employing a Microkernel or even no operating system at all). Still other ECUs may be high-performance systems, such as central controllers. Still further ECUs may run on proprietary platforms such as radar or camera-based sensors. Some ECUs may run on an Intel x86 processor architecture, while other ECUs may run on an ARM processor architecture. ECU may feature multiple different platforms. For example, one ECU may feature an Intel x86 processor architecture and run a High Level OS(HLOS) such as LINUX, while another ECU may feature an ARM processor architecture and run a RTOS(Realtime OS) such as VxWork, while another ECU may feature an ARM processor architecture and run a Red Hat LINUX distribution. In some embodiments, platform may comprise virtual machines, as described in subsequent paragraphs of this disclosure.

In practice, the typical heterogeneity of the ECUs in terms of their different platforms is related to the different roles and functions of the ECUs (as explained above, from high-end computation machines to light-weight embedded systems, including e.g. different specific sensors. The different ECUs are typically also provided by different OEMs which employ different platforms for their ECUs. For example, one ECU provided by a first OEM features a first platform, while another ECU provided by a second OEM features a second platform.

The term "container" as referred herein is understood in the established meaning in the area of computer virtualization. A container image may comprise a portable package with executable code and its dependencies, libraries etc. A runtime container may comprise an independent runtime instance in an operating system created from container image which is separating code inside container from host and other containers. As such, the containers encompassed by the disclosure are a functional and portable cloud or non-cloud image surrounding the application and which is independent of other environments. A container may contain one or more different software application(s) and also run isolated processes by bundling together related configuration files, libraries and dependencies. As a consequence, containers remove much of the complexity around installing and configuring software, thus being suitable for automotive environments where installation of a certain software or software components is specifically desired to be independent of other software and software components and safe.

Containers may be configured to be isolated, however, they may send and receive requests to other applications, such as the applications of a vehicle, by using corresponding communication technologies.

The term "containerized applications" as referred herein is understood as software applications running in containers providing the aforementioned isolated runtime environments. Containers encapsulate an application with all its dependencies, including system libraries, binaries, and configuration files. This packaging makes a containerized application portable by enabling it to behave consistently across different hosts, thereby allowing e.g. development teams to write an application once and to run it on a great variety of hosts. Containerized applications do not include their own operating systems. Different containerized applications running on a host system, instead, share the existing OS provided by that host system. The process of transforming an application into its isolated, abstracted form is known as containerization. The containerized application can be tested as a unit and deployed as a container image instance to the host operating system.

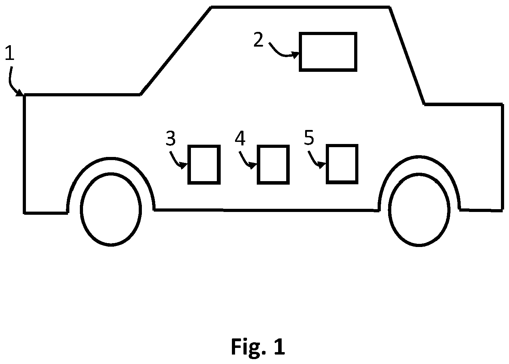

FIG. 1 illustrates a current smart vehicle 1 comprising a number of electronic control units (ECUs) 3, 4, 5 controlling one or more of the electrical systems or subsystems in the vehicle 1 and a controller 2. ECUs 3, 4, and 5 may comprise at least one of: engine control module (ECM), powertrain control module (PCM), transmission control module (TCM), brake control module (BCM or EBCM), central control module (CCM), central timing module (CTM), general electronic module (GEM), body control module (BCM), and suspension control module (SCM).

The ECUs of a vehicle, such as ECUs 3, 4, and 5 of vehicle 1 may form separate computers. In some embodiments, an assembly of ECUs includes several individual control modules (e.g. a PCM often controls both the engine and the transmission). The controller 2 executes e.g. the settings for the center of mass, inertia, axles, steering, brakes, tires, powertrain (engine, clutch, gearbox, retarder, driveline), driving aids and safety aids.

As mentioned above, at least some of the ECUs 3, 4, 5 of the vehicle 1 feature one or more different platforms, e.g. as they serve different functions and/or are provided by different OEMs.

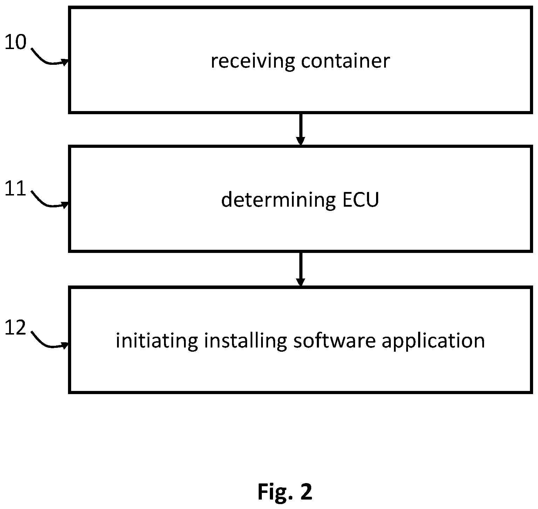

According to an aspect, FIG. 2 shows a flow chart for the update of software in a (smart) vehicle 1 comprising a controller 2 and a number of electronic control units, ECUs 3, 4, 5, of different platforms. In an activity 10, the controller 2 receives a container associated with one of the different platforms utilized by at least one of the number of ECUs 3, 4, 5, the container comprising a number of container layers, the container layers comprising at least a software application layer with a software application package installable at the platform. In an activity 11, the controller 2 determines the at least one ECU utilizing the platform among the number of ECUs 3, 4, 5. In an activity 12, the controller 2 initiates installing the software application package at the at least one ECU. Since the container is isolated from other containers, installing (and updating) a software application for a single vehicle function in its own container can be executed at the vehicle 1.

In particular, utilizing one and the same container standard (or de facto standard) for any software update for any ECU in the vehicle renders the software update procedure in the vehicle less complex because the controller unit(s) being responsible for controlling any software update only need to handle such one container type and the remaining software update heterogeneity in terms of different platforms, different software types, different update types, etc. is hidden within the container. A container brings the updated software or software to be installed, routines to unpack the software update, installation routines specifically adapted for the target platform of the ECU(s) to be updated, etc.

In embodiments, the container can itself carry a specification, such as an identifier indicating for which platform and/or ECU said container carries software packages. A central update controller in the vehicle, such as controller 2 of vehicle 1, reads this identifier and calls the container with the corresponding target ECUs as parameters. In embodiments, the identifier relating to the ECU may be in functional data related to or included in the container which is accessible to the central update controller of the vehicle. As an example, the identifier may be part of a manifest of the container. The identifier may comprise a unique identifier for one or more ECUs (or nodes) for which software packages have to be installed or software upgrades have to be executed. The unique identifier may have been previously stored at the controller 2 and the corresponding ECUs in order to enable the controller 2 to orchestrate the distribution of the containers to exactly those ECUs said containers are bound for.

The methodologies of FIG. 2 therefore enable an efficient software installation at the vehicle in comparison with e. g. an installation of the entire software system of the vehicle 1. Furthermore, the methodologies as shown in FIG. 2 can facilitate a safer software installation.

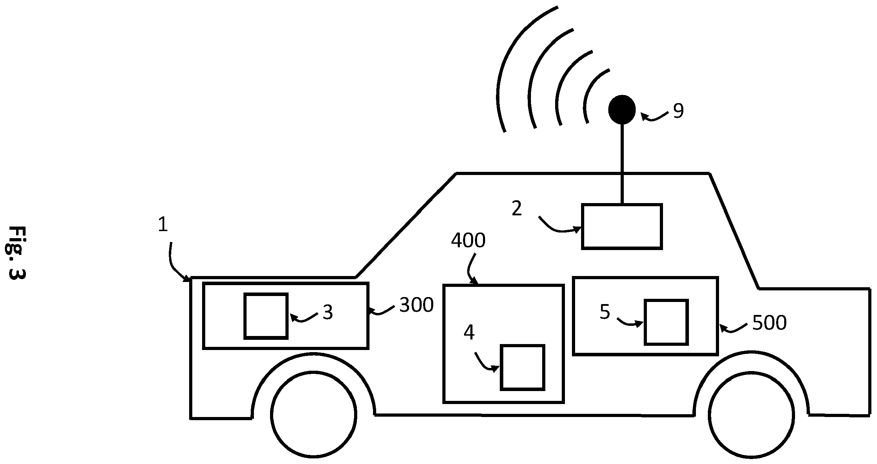

In some embodiments, an ECU 3, 4, 5 may be a vehicle zone controller for controlling a zone of vehicle. A zone of a vehicle may comprise computers, controllers, sensors and actors responsible for certain functionalities of a vehicle, such as the control of the motor, the braking and steering system, driver assistance systems etc., as described in detail for some examples below. FIG. 3 illustrates vehicle 1 including a number of vehicle zones controlled and supervised by an ECU, such as zone 300 controlled by ECU 300, zone 400 controlled by ECU 400 and zone 500 controlled by ECO 5.

Each vehicle sensor and actuator may connect to a local vehicle zone controller based on its location and function within the vehicle. The zone controller may perform local data transformation, may aggregate the data and may put it onto a single high-speed cable that connects to a vehicle computer. The zone controllers may handle the communication (commands, signals, data) with end devices via a controller area network (CAN) or local interconnect network (LIN) bus to ECUs or body control-related sensors and actuators, Ethernet or low-voltage differential signaling (LVDS) interfaces to cameras or other advanced driver-assistance systems (ADAS) sensors, thereby employing the data format used by those devices. Zone controller may aggregate communicated data onto Ethernet or PCI Express for e.g. high-bandwidth ADAS sensors or onto CAN-FD (CAN-flexible data-rate) for lower-bandwidth body control functions, and may send the data to appropriate domain controllers. In this way, the I/O is abstracted from the vehicle computers.

As an example for zone controllers, the Powertrain and Chassis Controller (PCC) is responsible for vehicle dynamics, which includes motor/transmission, braking, steering and suspension. Citing a further example, the Central Vehicle Controller (CVC) may be responsible for body control, as well as overall network management. The CVC may be comprised by controller 2 or by one or more of the ECUs 3, 4, 5 and may function as the body and power control master for all of the zone controllers of the vehicle 1. The CVC may also handle communications of the vehicle 1 with the outside world. A CVC may receive, e.g. over an over-the-air (OTA) interface 9 as shown in FIG. 3, software programs and updates for installation at the ECUs 3, 4, 5 and distributes them to the ECUs 3, 4 ,5 in the vehicle 1 as needed. The CVC may have its own direct connections to the zone controllers, such as ECUs 3, 4, 5 for sending them software programs and updates for installation at vehicle end devices comprising sensors and actors connected to them.

In embodiments, the container may be implemented by a (de facto) standardized container image like OCI standard. Such standardized or de facto standardized containers are universal applicable and allow for packing any kind of software which can be updated. Said software may comprise a file, an application runtime container with corresponding dependencies, a firmware, base operating system (OS) image.

A container according to the embodiments may comprise an image having a layered format. Container images may provide a single unit of functionality, may have an independent release cycle, and may provide deployment and runtime isolation. A container image may be a standard box for software. This box may have a standard interface that stays the same regardless of what application is stored inside. By way of a container image, any kind of software being deployed to vehicle software may be encapsulated and loaded independently. Further, a container image may enable software update and tooling standardization in a complete path starting e. g. from the cloud up to vehicle 1. Due to the layered format of an image incremental/differential updates may be possible, thereby reducing amount of data transmitted to the vehicle. Thus, by placing any kind of software running in vehicle 1 into standardized containers, building, testing, shipping and installing software in vehicle 1 can be simplified and performed more efficiently.

After building an image, it may be shared over a network, such as a cellular network, by e. g. the corresponding software developing team. Operators, such as vehicle maintenance teams may then copy it to the machine, such as ECUs 3, 4, 5 of vehicle 1, where they want to run the packaged software.

The container, such as a standard container using a standard package format, may comprise additional and/or updated software applications for one or more containerized platforms and for the one or more non-containerized platforms. In some embodiments, the container comprises a runtime container such as an application container and/or an install container.

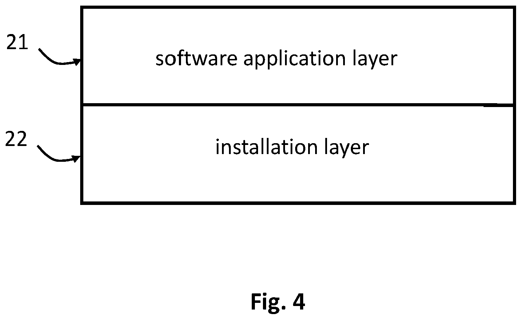

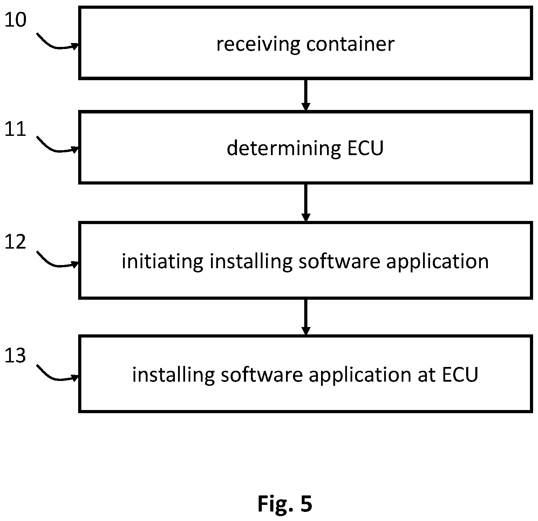

In some embodiments and as shown in FIG. 4, the container layers 21, 22 further comprise an installation layer 22 with an installation program configured to install the software application package, such as applications 1 and 2 of FIG. 4, at the at least one ECU 3, 4, 5. Container layer 21 may comprise e.g. one or more of the software applications to be installed. As shown in FIG. 5, the update of software in a (smart) vehicle 1 further comprises, at the controller 2, installing, using the installation program, the software application package at the at least one ECU 3, 4, 5. An installation layer 22 with an installation program is especially configured to install a system software on an ECU 3, 4, 5 taking into account the specific hardware and software requirement of that ECU 3, 4, 5.

The installation of the software application package may be controlled by the controller 2, by e. g controlling and steering a container engine running the container. A container engine may comprise software components enabling the controller 2 to act as a container host. The container engine may start and manage containers. The container engine may comprise a container runtime for running containers and for handling storage needs of the container on the local system.

In embodiments, the installation of the software application packages at one or more ECUs may be executed by an agent-based system, with the controller 2 operating as a master unit and a software installation agent being installed at each one of the ECUs. The agent utilizes container standards applicable for different ECU-types to execute software installations and updates. The agent enables the ECUs to be visible to the master controller 2 and enables uniform software installation and update procedures at the ECUs of the vehicle 1.

When receiving a container for installation of software or for a software update at certain ECUs, master controller 2 may identify the respective ECUs, e. g. by using the unique identifier for the respective ECU comprised by the manifest of the container. The master controller 2 then may instruct the corresponding agents of the ECUs to execute the requested software installations and updates. In response, the agent may pull from a (local) repository being e. g. located at the controller 2 the container and may push the container to the ECUs. The agent then may unpack the container, install the files, set the necessary permission and report to the master controller 2.

Agent-based systems or lightweight agent-based systems may also be applied or software installations and updates in embedded systems integrated in the vehicle 1, with the embedded systems applying application programming interfaces (APIs) as standard interfaces for e. g. receiving software packages from the master controller 2.

The installation layer 22 may comprise a flashing application or flasher for installing a software application package. A flasher may be updated together with an image thereby guaranteeing compatibility. Therefore, keeping specific installation programs on the vehicle platforms is not necessary.

The image may comprise a package to transport software to be installed into the vehicle 1. The image may be destroyed once the software is installed in the vehicle 1.

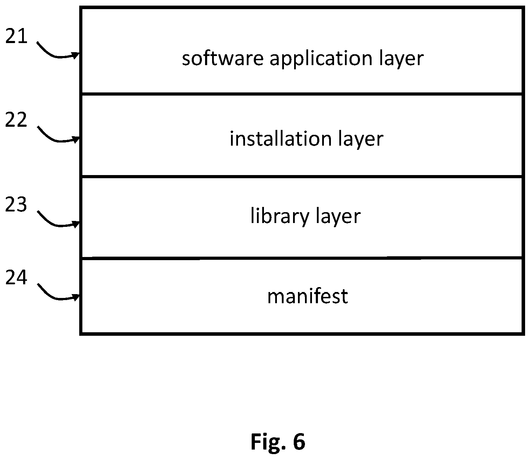

In some embodiments and as illustrated in FIG. 6, the container layers further comprise a library layer 23 with a library to run the container and a manifest 24 with configuration information of the container.

The library may comprise a generic collection of code templates and algorithms that allowing easily implementing common data structures such as queues, lists and stacks. Containers may allow also to share libraries or other digital resources via volumes while still maintaining separation. The manifest 24 may comprise an image manifest providing a configuration and requirements for a single container image for a specific architecture and operating system, such as those for zones 300, 400 and 500 of vehicle 1.

The image may be reconstructed at the target system of the vehicle 1, such as at the ECUs 3, 4, 5. The reconstruction of the image may be driven by the manifest 24. Furthermore, the container may comprise a registry keeping records of the container layers and how said layers contribute to the reconstruction of the image.

Using containers for installing and updating of software at a vehicle enables the application of unified standards when installing and updating software in a vehicle. A container standard enables different software development teams and companies to independently build and integrate software into the overall code base of a vehicle and perform automated testing. A container standard further enable speedier software integration, reduces software errors and enables timely updates over the air (OTA) before and after production of a vehicle. The container according to embodiments contains everything needed at build time and usually address a single problem, by encapsulating software dependencies and allowing safe and easy software installations and updates. Reuse and replaceability of software (components) are therefore enhanced. In general, containerized applications are meant to be immutable, but once installed e.g. at the zone of a vehicle, these applications may change between different environments. Therefore, containerized applications also enable an easier testing of software components with respect to a certain environment. Further, containerized applications enable the migration of legacy functions from electronic control units into centralized domain controllers without negatively affecting the safety of the general system.

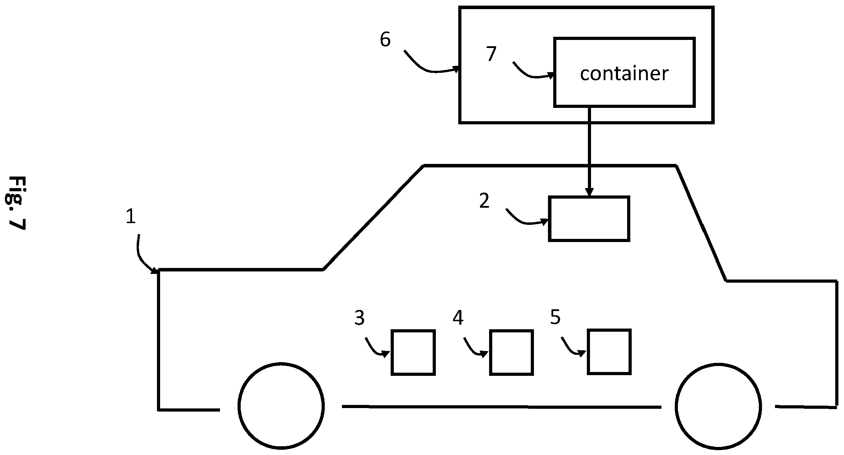

In some embodiments as shown in FIG. 7, the container 7 is received from a software update repository 6 holding collections of software to be installed and software updates for the ECUs 3, 4, 5 of different platforms or from an original equipment manufacturer (OEM) of the at least one ECU. The update repository 6 may comprise a cloud platform operated by the OEM manufacturer or a software manufacturer/vendor or other third-party supplier. In some embodiments, a local repository installed at the vehicle 1 may be applied for pulling software packages from the update repository 6. The local repository may store current versions of container images and may store also previous image versions for e. g. the remedy of software errors occurring in the ECUs.

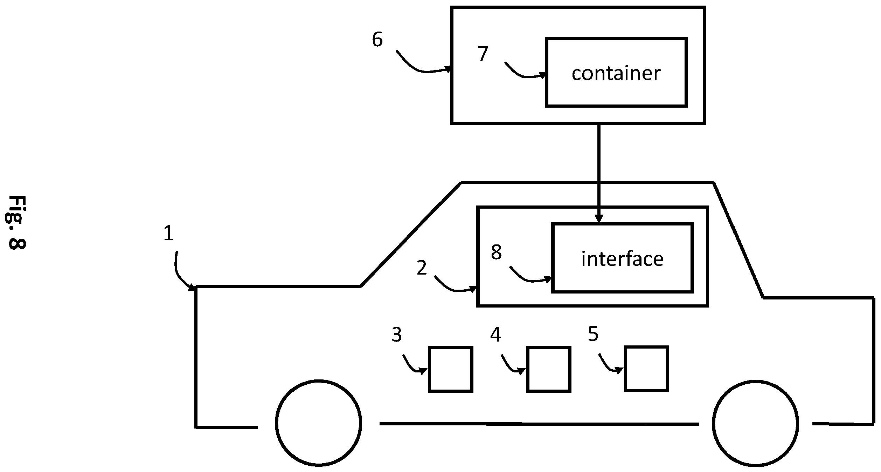

In some embodiments and as shown in FIG. 8, the container 7 is received over a communication interface 8 of the vehicle 1 configured for receiving containerized software updates for the ECUs 3, 4, 5 of different platforms. Software installations and updates originating from different development teams and vendors therefore can be installed at the vehicle 1.

As already described within this disclosure and shown in FIG. 3, the communication interface may comprise an over-the-air (OTA) interface. This enables to download software applications, services, and configurations over a mobile or cellular network. Software installations and updates over an OTA, such as OTA 9 of FIG. 3 may be delivered remotely and do not require a trip to a dealership or mechanic. This simplifies the software update process and allows e.g. easy bug fixes promoting reliability of the vehicle and its functions. Software updates using OTAs address the problems associated with customer disruption and the intrinsic delay between the availability of a new software update and the deployment of that update to the target vehicle. Through vehicle connectivity, new automotive software updates can be pushed or pulled to the target vehicle at any time. For example, a software update pull request could be initiated by the consumer as part of an aftermarket software upgrade or additional automotive functionality. A push update could be applied by the Original Equipment Manufacturer (OEM) or vehicle manufacturer, to resolve an identified software bug or vulnerability thus circumventing the return/recall process and the inherent delays this entails.

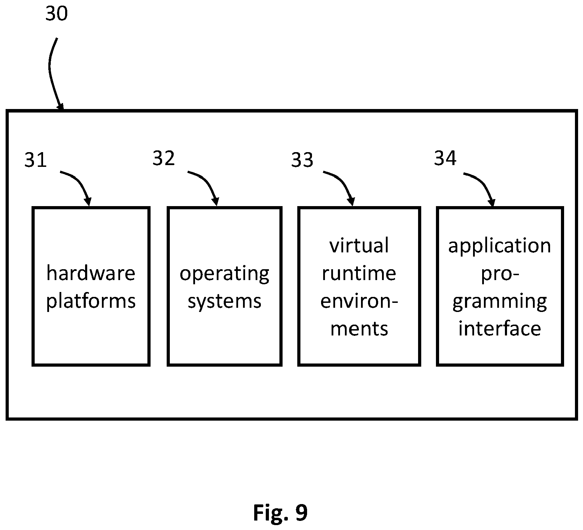

In embodiments and as illustrated in FIG. 9, the different platforms 30 comprise at least one of different hardware platforms 31, different operating systems 32, different virtual runtime environments 33, different application programming interfaces 34. This enables the adaptation of the platform to specific functionalities and groups of functionalities executed by the vehicle 1.

To cite an example, the platform 30 may be adapted to the functionalities required for driver assistance systems involving body control of the driver of the vehicle 1. Body control may be handled via a CAN-FD network, with a star topology featuring the CVC at the center. A star topology is an efficient approach when the network is organized into manageable zones, and it can support selective wake-up. Communication between ADAS sensors, being comprised e.g. by hardware platform 31, may be handled via a separate network based upon either the Ethernet Time-Sensitive Networking standard or Automotive PCI Express, connected via a separate star topology network to the CVC. When redundancy is desirable - at Autonomous Level 3 and higher - the ADAS sensor network will form two rings, with major nodes on the rings including the central computing node, the CVC and the zone controllers. While a ring topology is modestly more expensive than the star topology it replaces, it reliably delivers fail-operational performance without the need for duplication. As a result, it is far more cost-efficient than alternative approaches for supporting Level 3 automation and above.

Operating systems 32 may comprise operating systems (OS) for embedded systems such as Embedded Linux , BusyBox, uClibc, musl libc, and buildroot. ECUs 3, 4, 5 and other computing units being comprised by the zones 300, 400 and 500, which may run different operating systems.

Virtual runtime environments 33 may comprise Java Runtime Environment (JRE), e.g. the Java Virtual Machine (JVM). Application programming interfaces (API) 34 may comprise remote APIs allowing developers to manipulate remote resources through protocols and/or specific standards for communication that allow different technologies to work together, regardless of language or platform. APIs 34 may also comprise Web APIs being accessed from e. g. client devices, such as mobile phones, of the driver or passenger of vehicle 1 using e.g. the Hypertext Transfer Protocol (HTTP).

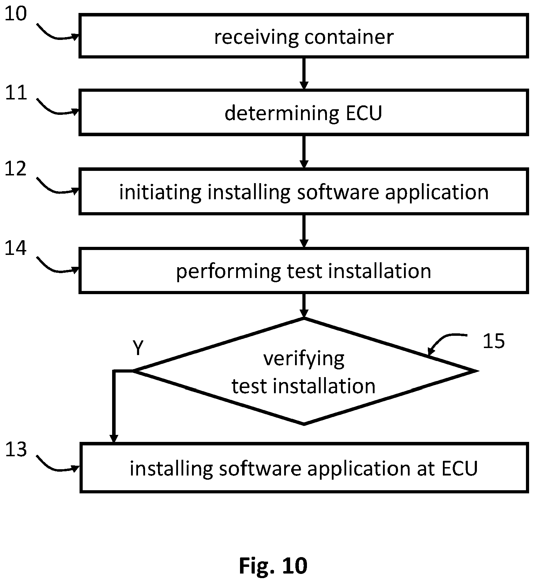

In embodiments, and as shown in FIG. 10, the update of software as illustrated in FIG. 2 may further comprise, in an activity 14, before installing the software application package at the at least one ECU, performing a test installation in a virtual system emulating the platform associated with the container, and in an activity 15, verifying the test installation; and installing the software application package at the at least one ECU if the verification is affirmative. Activities 14 and 15 may be executed e. g. using a virtual lab being able to process and analyze the large amount of data. A virtual lab may be comprised by a cloud-based software designed to process large, complex data sets and, through its optimized interface, being able to provide both a quick overview of the results and detailed analysis to help identify problems. Furthermore, by using a virtual lab, different types of vehicle bus simulation and control of all common bus systems like CAN, LIN and Flexray may be performed. Activities 14 and 15 may also be executed e. g in a Java Runtime Environment (JRE), such as the Java Virtual Machine (JVM).

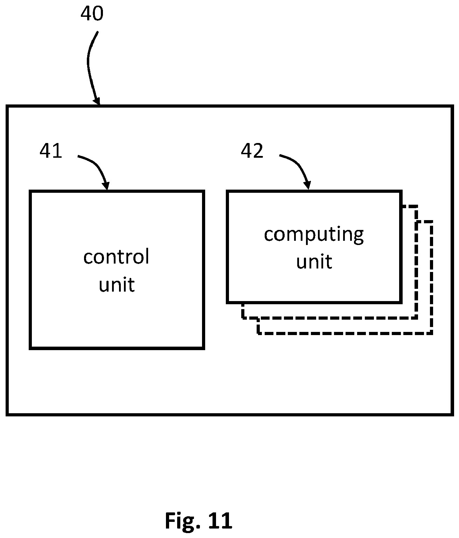

According to an aspect and as shown in FIG. 11, a vehicle assistance system 40 for executing a vehicle control function is provided, the vehicle assistance system 40 comprising: a control unit 41 and a number of computing units 42 as described in the preceding paragraphs; configured to perform the methods as described within the present disclosure.

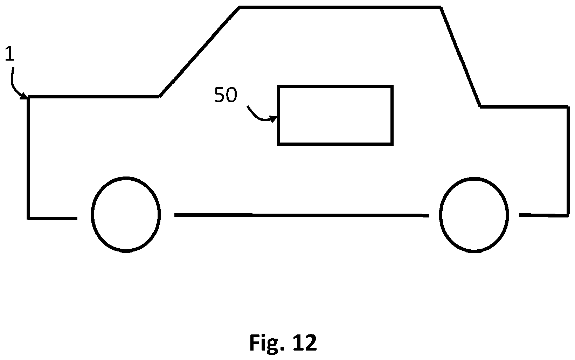

According to an aspect and as shown in FIG. 12, a vehicle 1 is provided comprising the vehicle assistance system 50 as described in the preceding paragraphs executing any one of the methods as described within the present disclosure. Within the present disclosure, the term "vehicle" includes all type of vehicles, such as a car, an autonomous car, a streetcar, a railway-car etc.

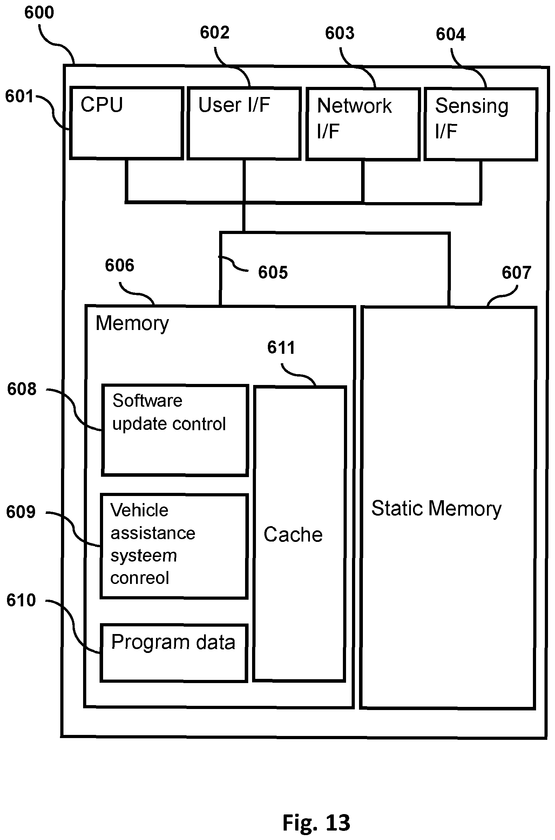

FIG. 13 is a diagrammatic representation of internal components of a data processing system 600 implementing the functionality as described herein, such as the vehicle assistance system 50 of FIG. 12. The data processing system 600 may be located in the vehicle and includes at least one processor 601, a user interface 602, a network interface 603 and a main memory 606, that communicate with each other via a bus 605. Optionally, the data processing system 600 may further include a static memory 607 and a disk-drive unit (not shown) that also communicate with each via the bus 605. A video display, an alpha-numeric input device and a cursor control device may be provided as examples of user interface 602.

Furthermore, the data processing system 600 may also comprise a specified sensing interface 604 to communicate with imaging system 300 of the vehicle. Alternatively, the data processing system 600 may communicate with the vehicle assistance system 50 via the network interface 603. The data processing system 600 may also be connected to database systems (not shown) via the network interface, wherein the database systems store at least part of the images needed for providing the functionalities described herein.

The main memory 606 may be a random-access memory (RAM) and/or any further volatile memory. The main memory 606 may store program code for the software update control 608 and the vehicle assistance system control 609. The memory 606 may also store additional program data required for providing the functionalities described herein. Part of the program data 610, the software update control 608 and/or the vehicle assistance system control 609 may also be stored in a separate, e.g. cloud memory and executed at least in part remotely. In such an exemplary embodiment, the memory 606 may store the installed software and the software updates according to the methods described herein in a cache 611.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A method of installing software in a vehicle, the vehicle comprising a controller and a number of electronic control units, ECUs, of different platforms, the method comprising, at the controller:
- receiving a container associated with one of the different platforms utilized by at least one of the number of ECUs, the container comprising a number of container layers, the container layers comprising at least:
a software application layer with a software application package installable at the platform;
- determining the at least one ECU utilizing the platform among the number of ECUs; and
- initiating installing the software application package at the at least one ECU.

2. The method of claim 1, wherein the container layers further comprise an installation layer with an installation program configured to install the software application package at the at least one ECU, and wherein the method further comprises:
- installing, using the installation program, the software application package at the at least one ECU.

3. The method of claim 1 or claim 2, wherein the container layers further comprise a library layer with a library to run the container and a manifest with configuration information of the container.

4. The method of any one of claims 1 to 3, wherein the container is received from a software update repository holding software updates for the ECUs of different platforms or from an original equipment manufacturer of the at least one ECU.

5. The method of any one of claims 1 to 4, wherein the container is received over a communication interface of the vehicle configured for receiving containerized software updates for the ECUs of different platforms.

6. The method of any one of claims 1 to 5, wherein the different platforms comprise at least one of different hardware platforms, different operating systems, different virtual runtime environments, different application programming interfaces.

7. The method of any one of claims 1 to 6, further comprising:
- before installing the software application package at the at least one ECU, performing a test installation in a virtual system emulating the platform associated with the container;
- verifying the test installation; and
- installing the software application package at the at least one ECU if the verification is affirmative.

8. A vehicle assistance system for executing a vehicle control function, the vehicle assistance system comprising:
- a control unit;
- a number of computing units;
configured to perform the methods of any one of claims 1 to 7.

9. A vehicle comprising the system of claim 8.

10. A computer program product comprising instructions, which, when executed on a computer, cause the computer to perform the methods any one of claims 1 to 7.
